# FASCICULE DE BREVET EUROPEEN

(11) **EP 3 063 195 B1**
(45) Date de publication et mention de la délivrance du brevet: **01.09.2021**
(21) Numéro de dépôt: 14825371.9
(22) Date de dépôt: 21.10.2014
(51) Int. Cl.: C08G 18/10, C08G 18/38, C07C 235/10

(54) **ADDITIFS A BASE DE DIAMIDES GRAS POUR COMPOSITIONS RETICULABLES SENSIBLES AUX NUCLEOPHILES**
ADDITIVE AUS FETTSÄUREDIAMIDEN FÜR NUKLEOPHILENSENSITIVE VERNETZBARE ZUSAMMENSETZUNGEN
ADDITIVES MADE FROM FATTY DIAMIDES FOR NUCLEOPHILE-SENSITIVE CROSS-LINKABLE COMPOSITIONS

(30) Priorité: 31.10.2013 FR 1360675
(43) Date de publication de la demande: 07.09.2016
(73) Titulaire: Arkema France, 92700 Colombes (FR)
(72) Inventeur: BERNARD, Michael Y., F-95880 Enghien-les-Bains (FR); FAUQUET, Germain, 59123 Zuydcoote (FR); LEPINAY, Laurent, F-60110 Meru (FR); LEROY, Vincent, F-60600 Fitz James (FR)
(74) Mandataire: Arkema Patent
(86) Numéro de dépôt international: PCT/FR2014/052669
(87) Numéro de publication internationale: WO 2015/063389

(56) Documents cités:
- EP-A1- 1 162 242
- EP-A1- 1 935 934
- EP-A1- 2 410 018
- FUKUDA K ET AL: "Urethane sealant compsn. - comprises polyurethane prepolymer contg. terminal isocyanate gps. thixotropic fatty acids, filler, plasticiser, etc", WPI / THOMSON,, vol. 1988, no. 9, 22 janvier 1988 (1988-01-22), XP002726163, -& JP S63 15876 A (MITSUI TOATSU CHEMICALS; SANYO IND LTD) 22 janvier 1988 (1988-01-22)

## Description

La présente invention concerne une composition spécifique à base de diamide d'acide gras, convenable comme additif de rhéologie dans des compositions réticulables, en particulier « monocomposants » ou 1k et, plus particulièrement, dans des compositions comportant un composant sensible aux nucléophiles, comme les compositions de polyuréthane réticulables.

Il existe déjà des additifs de rhéologie qui sont des diamides d'acides gras, utilisés pour des compositions de mastics et d'adhésifs, en particulier des diamides à base d'acide 12-hydroxystéarique. Ces diamides, qui se présentent sous forme de poudre micronisée ayant une taille moyenne de particules allant de 5 à 20 µm, sont des organogélateurs, c'est-à-dire des petites molécules organiques capables de gélifier toute sorte de solvants organiques, même à des concentrations massiques relativement faibles. Dans leur milieu, elles sont souvent organisées sous forme de fibres, ce qui explique leur effet d'organogélateur et de modificateur de rhéologie. Le passage de l'état de poudre à l'état de fibres dans un milieu organique est appelé activation. Cette activation est obtenue par un cisaillement élevé à une température adaptée à l'utilisation.

Ces diamides permettent d'avoir des bonnes performances dans les mastics type « MS-Polymer® », polymères hybrides à base de terminaisons silanes alcoxylés ou technologie polyuréthane-silanes avec des terminaisons silanes bloquées, mais ils sont mal adaptés dans la technologie des compositions polyuréthanes, en particulier monocomposants symbolisés en abrégé par « 1K-PU » où ils peuvent générer des problèmes de stabilité de ces mastics, avec réticulation prématurée et temps ouvert (« pot life ») limité en usage, rendant inutilisable la composition.

Comme voies alternatives existantes, il y a des additifs tels que les silices traitées ou les polyurées.

En effet, les silices posent de problèmes d'hygiène et de santé lors de leur manipulation à cause des poussières très fines émises dans l'atmosphère, avec des problèmes de performances, de reproductibilité, de sédimentation en comparaison aux additifs organiques tels que les amides ou polyurées. Il existe une alternative connue parmi les additifs « organiques » qui sont les polyurées, souvent développées sur mesure par les formulateurs de polyuréthanes eux-mêmes. Les polyurées fabriquées à partir d'isocyanates et d'amine ont par contre l'inconvénient d'être difficilement contrôlables comme additifs en termes de structure, des performances et de reproductibilité desdites performances et de fabrication, reproductibilité liée à des problèmes de solubilité et de compatibilité avec le milieu de fabrication ou d'application, compte tenu de la structure très cohésive d'une liaison urée. Un tel additif de rhéologie à base d'urée est décrit par exemple dans US 6,548,593.

JP6315876A décrit l'utilisation de diamides d'acides gras comme agents thixotropiques dans des compositions de polyuréthanes. La présente invention vise un additif « activable » à basse température dans une formulation sensible aux nucléophiles, en particulier polyuréthane, comme 1K-PU, mais aussi 2K-PU, plus particulièrement 1K-PU, lequel additif offre une solution rhéologique performante et permet de préserver la stabilité des formulations sensibles aux nucléophiles, en particulier de polyuréthanes, plus particulièrement de mastics 1K-PU ou d'autres compositions sensibles aux nucléophiles. Le problème technique principal à résoudre est donc la recherche de moyens permettant la préservation de la stabilité desdites formulations sensibles lors du stockage. Ensuite, concernant les performances rhéologiques liées essentiellement au processus d'activation, celles-ci dépendront du choix de la température et du plastifiant utilisé en fonction du milieu d'application final.

La présente invention vise plus précisément des compositions d'additifs amides permettant leur utilisation comme organogélateurs et en particulier comme additifs de rhéologie dans des compositions de formulations sensibles aux nucléophiles, sans les inconvénients cités de l'état de la technique, en évitant la dégradation de la stabilité desdites compositions ou une gélification (signifiant ici réticulation irréversible) prématurée.

Le premier objet de l'invention concerne une composition à base de diamide d'acide gras, laquelle composition comprend et en particulier consiste :
a) de 92 à 100% en poids d'un ou plusieurs diamides d'acide gras, le(s)dit(s) diamide(s) étant traité(s) in situ par un agent neutralisant de sorte à réduire le taux résiduel d'amine dans lesdits un ou plusieurs diamides d'acide gras, à un indice d'amine résiduelle exprimé en mg KOH/g qui reste inférieur à 0,5, de préférence inférieur à 0,15, plus préférentiellement inférieur à 0,1 et encore plus préférentiellement inférieur à 0,05,
b) en option, jusqu'à 8%, de préférence de 1 à 8% en poids d'au moins un oligomère amorphe ou semi-cristallin de Tg supérieure à 60°C, de préférence supérieure à 70°C,
sous condition que, si ledit oligomère b) est présent la somme des % en poids a) + b) soit égale à 100% en poids de ladite composition à base de diamide et en ce que a) et b) soient miscibles en mélange, en particulier à l'état fondu et que ledit oligomère b) soit exempt de tout groupement ou structure nucléophile.

Selon une variante, ladite composition comprend et en particulier consiste :
a) de 92 à 99% en poids d'un ou de plusieurs desdits diamides d'acide gras,
b) de 1 à 8% en poids dudit oligomère.

L'indice d'amine, tel que cité ci-haut, est mesuré par titration potentiométrique en utilisant comme réactif HCl 0,1 M, dans un solvant Toluène/n-butanol avec un rapport en volume 1/2. Le produit peut être solubilisé à 80°C dans ledit mélange de solvants.

« Etat fondu », cité ci-avant signifie, selon l'invention, ayant lieu à une température où ledit diamide est à l'état fondu, ce qui signifie que b) doit être fondu à cette même température s'il est présent. Le terme « miscible » signifie homogène et transparent à l'état fondu sans séparation de phase.

La Tg est déterminée par mesure DSC et correspond à la température du point d'inflexion au 2^{ème} passage, à une vitesse de chauffe de 10°C/min.

Plus particulièrement, concernant ladite composition à base de diamide, la masse moléculaire moyenne en nombre Mn dudit oligomère b) est inférieure à 10000 et de préférence inférieure à 5000. Ladite masse Mn est mesurée par GPC dans le THF en équivalents polystyrène utilisé comme étalon.

Selon une option particulièrement préférée, ledit diamide gras est le produit de réaction d'une diamine avec un monoacide gras hydroxylé. Plus particulièrement, ledit acide gras hydroxylé est choisi parmi au moins un acide gras hydroxylé du groupe : acide 12-hydroxystéarique (12-HSA), 9- et/ou 10-hydroxystéarique ou 14-hydroxy eicosanoique et de préférence le 12-hydroxystéarique. Selon une première variante, ledit diamide a) est symétrique et le produit de réaction d'une mole de diamine aliphatique en C₂ à C₆ et de deux moles d'un monoacide gras hydroxylé parmi : 12-hydroxystéarique (12-HSA), 9-et/ou 10-hydroxystéarique ou 14-hydroxy eicosanoique et de préférence le 12-hydroxystéarique.

Selon une première variante plus particulière, ledit diamide a) est symétrique et correspond au produit de réaction d'une mole de diamine linéaire aliphatique en C₂ à C₆ avec deux moles d'acide 12-hydroxystéarique (12-HSA).

Comme diamines convenables en C₂ à C₆, on peut citer plus précisément les suivantes : éthylène diamine, propylène diamine, butylène diamine, pentane diamine et hexaméthylène diamine.

Selon une autre variante, ledit diamide a) comprend au moins un diamide dissymétrique produit de réaction d'une mole de diamine linéaire aliphatique en C₂ à C₆ avec une mole d'acide monocarboxylique en C₅ à C₁₂ et d'une mole d'un monoacide gras hydroxylé parmi : 12-hydroxystéarique (12-HSA), 9- et/ou 10-hydroxystéarique ou 14-hydroxy eicosanoique et de préférence le 12-hydroxystéarique.

Selon cette variante plus particulièrement, ledit diamide a) comprend au moins un diamide dissymétrique qui correspond au produit de réaction d'une mole de diamine linéaire aliphatique en C₂ à C₆ avec une mole d'acide 12-hydroxystéarique (12-HSA) et une mole d'acide monocarboxylique en C₅ à C₁₂.

Comme acides monocarboxyliques convenables en C₅ à C₁₂, on peut citer plus précisément les suivants : acides pentanoïque, hexanoïque, heptanoïque, octanoïque, nonanoïque, décanoïque, undécanoique ou dodécanoïque (ou laurique).

Plus particulièrement, selon l'invention, ledit agent neutralisant comporte au moins une fonction réactive avec ladite amine résiduelle (ou libre) de sorte que le(s) diamide(s) neutralisé(s) a ou ont en final un indice d'amine tel que défini ci-haut. De préférence, ledit agent neutralisant a un point d'ébullition d'au moins 130°C et plus préférentiellement d'au moins 150°C, ceci étant pour des questions de facilité d'addition et d'efficacité de la neutralisation de l'amine résiduelle dans le diamide, en particulier à l'état fondu. Plus particulièrement, ledit agent neutralisant peut être sélectionné parmi :
- les acides forts minéraux ou organiques, en particulier les acides ayant un pka (ka étant la constante d'acidité) inférieur à 2 (< 2) et de préférence inférieur à 1 (< 1) et/ou
- les halogénures d'acides monocarboxyliques, en particulier les chlorures d'acides monocarboxyliques,
- les halogénures d'acides polycarboxyliques de chaines carbonées ayant un nombre d'atomes de carbone inférieur à 10.

Lesdits acides minéraux ou organiques forts peuvent être des acides de Brönsted ou de Lewis. Les acides minéraux forts peuvent être en particulier des halogénures de sulfonyle, en particulier des chlorures de sulfonyle, tel que le chlorure de tosyle (chlorure de 4-toluène sulfonyle).

Les acides forts organiques peuvent être des acides organiques ou des anhydrides organiques halogénés dans la chaîne portant le groupement acide qui peut être, par exemple, carboxylique ou sulfonique. Dans ce cas, ledit halogène peut être choisi parmi Cl ou F. Comme exemples d'acides organiques forts convenables, on peut citer l'acide trichloroacétique ou trifluoroacétique ou trifluorométhanesulfonique (appelé aussi acide triflique).

Comme exemples convenables d'acides minéraux forts sans limitation, on peut citer : l'acide sulfurique ou le chlorure de tosyle.

Comme exemples d'halogénures d'acides monocarboxyliques (halogénure d'acyle), on peut citer : le chlorure de benzoyle ou le chlorure d'hexanoyle.

Comme exemples d'halogénures d'acides polycarboxyliques, on peut citer le chlorure de glutaroyle, d'adipoyle, de piméloyle, de subéroyle, de sébacyle ou de o-phtaloyle.

Selon une préférence particulière, ledit agent neutralisant est présent en quantité au moins stœchiométrique par rapport à l'indice d'amine résiduel, c'est-à-dire l'indice d'amine dudit ou desdits diamide(s) a) avant neutralisation, avec le produit de neutralisation restant in situ dans ledit ou lesdits diamide(s) ainsi traité(s).

Ledit oligomère b), si présent, peut en particulier être fonctionnalisé, de préférence avec une fonction acide carboxy ou il peut être non fonctionnalisé. Ledit oligomère b) peut être sélectionné parmi : polyamide, polyester, au moins un copolymère d'anhydride maléique ou d'acide acrylique ou d'acide méthacrylique avec au moins un autre comonomère, en particulier copolymère parmi oligoéthylène maléinisé, résine de monomères vinyl aromatiques maléinisée ou copolymère d'anhydride maléique ou d'acide acrylique ou d'acide méthacrylique avec au moins un monomère vinyl aromatique, de préférence copolymère styrène-anhydride maléique, copolymère styrène-acide (méth)acrylique, résine à base de monomères cycloaliphatiques maleinisées, cires semi-cristallines maléinisées, résine d'hydrocarbures (de pétrole) maléinisée, résine de colophane maléinisée y compris esters de colophane maléinisés. Parmi les oligomères préférés, on peut citer les polyamides et les copolymères d'anhydride maléique ou d'acide acrylique ou d'acide méthacrylique avec au moins un autre comonomère, tel que le styrène ou des résines maléinisées comme citées ci-haut.

Ledit oligomère b), si présent, est exempt de tout groupement ou structure nucléophile, compte tenu du problème technique à résoudre défini ci-haut. Comme exemple de groupements exclus de la structure dudit oligomère, on peut citer, par exemple, l'amine ou l'hydroxyle. En fait, ledit oligomère b) ne doit pas pouvoir réagir avec un composant dans la composition réticulable d'application finale.

Plus particulièrement, ledit oligomère b), si présent, est un polyamide qui peut être présent en mélange avec ledit diamide a) par le fait qu'il a été préparé in situ à l'état fondu, après la préparation dudit diamide a) ou avant la préparation dudit diamide a), dans le même réacteur avec ledit traitement par un agent neutralisant appliqué audit mélange [a) + b)] à l'état fondu.

Selon une variante particulière, la présence dudit oligomère b) n'est pas essentielle dans ladite composition de diamide gras.

Les deux options d'additif, avec présence ou absence dudit oligomère b), présentent des performances excellentes de stabilité dans lesdites formulations sensibles aux nucléophiles, ceci tout en conférant auxdites formulations des performances rhéologiques satisfaisantes par une activation adaptée à la formulation. En effet, ladite activation peut dépendre de la composition de la formulation utilisée, en particulier de la nature du plastifiant et de la température d'activation, laquelle peut être adaptée à ladite formulation.

Selon une autre variante, ledit oligomère b) est présent dans ladite composition de diamide gras.

Le deuxième objet de l'invention concerne un procédé de préparation d'une composition à base de diamide telle que définie selon l'invention, lequel procédé comprend au moins les étapes suivantes et selon les deux options A) ou B) suivantes : Procédé selon option A :
i) traitement de neutralisation à l'état fondu dudit diamide a) par ledit agent neutralisant, de sorte que l'indice d'amine exprimé en mg KOH/g soit inférieur à 0,5, de préférence inférieur à 0,15, plus préférentiellement inférieur à 0,1 et encore plus préférentiellement inférieur à 0,05 et
ii) en option, si ledit oligomère b) est présent, mélange homogène à l'état fondu dudit diamide a) ainsi traité (neutralisé) de l'étape i) avec ledit oligomère b) à l'état fondu
iii) refroidissement du mélange de l'étape i) ou du mélange de l'étape ii) si b) est présent et micronisation par broyage mécanique ou par jet d'air, de préférence pour obtenir une taille moyenne en volume inférieure à 15 µm, plus préférentiellement inférieure à 10 µm.

Ladite taille peut être déterminée par diffraction laser.
Procédé selon option B, seulement si b) est présent :
i) mélange homogène à l'état fondu dudit diamide a) avec ledit oligomère b) à l'état fondu
ii) traitement de neutralisation à l'état fondu dudit mélange de l'étape i) par ledit agent neutralisant, de sorte que l'indice d'amine exprimé en mg KOH/g de diamide a) soit inférieur à 0,5, de préférence inférieur à 0,15, plus préférentiellement inférieur à 0,1 et encore plus préférentiellement inférieur à 0,05,
iii) refroidissement du mélange ainsi traité de l'étape ii) et micronisation par broyage mécanique ou par jet d'air, de préférence pour obtenir une taille moyenne en volume inférieure à 15 µm, plus préférentiellement inférieure à 10 µm.

Selon une variante de ce procédé selon option B, ledit oligomère b) est un polyamide et ledit procédé comprend une étape de préparation dudit polyamide b) à l'état fondu, avant ou après la préparation dudit diamide a) in situ dans le même réacteur et conduisant au mélange homogène de a) et de b) selon ladite étape i), avant ledit traitement de neutralisation à l'état fondu selon l'étape ii).

Un troisième objet de l'invention concerne une composition réticulable qui comprend au moins une composition à base de diamide, telle que définie ci-haut selon l'invention ou obtenue par un procédé tel que défini ci-haut selon l'invention et dont (composition réticulable) au moins un des composants réactifs est sensible à la présence d'une fonctionnalité nucléophile telle qu'une amine.

Selon une première possibilité, ladite composition concerne une composition bicomposante ou monocomposante, laquelle comprend au moins un composant parmi : polyisocyanate, oligomère ou polymère modifié silane (porteur de terminaisons silanes bloquées), en particulier polyéther modifié silane ou polyuréthane modifié silane, polyépoxyde, silicone, polysulfure, polyanhydride ou acrylate multifonctionnel de fonctionnalité moyenne supérieure à 2, de préférence polyisocyanate, polyépoxyde, polyanhydride, polysulfure, acrylate multifonctionnel, plus préférentiellement polyisocyanate. Des oligomères ou polymères modifiés silane sont par exemple décrits dans « Formulating Adhesives & Sealants » de Bodo Müller et Walter Rath dans European Coatings Tech Files de 2010.

Dans le cas de l'acrylate multifonctionnel (MFA), la sensibilité est liée au fait que l'amine résiduelle peut réagir par addition de Michaël sur lesdites fonctions acrylates en formant des liaisons aminoacrylate par addition de l'amine sur l'insaturation acrylate et réticulant ainsi prématurément la composition à utiliser.

Dans d'autres cas, ladite amine peut réagir avec le liant principal, par exemple polyisocyanate, polyépoxyde ou polyanhydride ou catalyser la réaction de réticulation et donc accélérer de manière prématurée ladite réticulation, avec comme exemple de catalyse le cas de polysulfures. Donc, ladite sensibilité dudit composant peut se manifester, soit par un effet de réactivité ou par un effet de catalyse de ladite fonction nucléophile telle qu'une amine.

Selon une possibilité, ladite composition telle que décrite ci-haut concerne une composition pour des revêtements ou une composition de revêtements, en particulier pour ou de peintures, encres, adhésifs ou une composition d'agents d'étanchéité, de mastics, de colles ou une composition de moulage en particulier pour composites.

Un autre objet de l'invention concerne l'utilisation d'une composition à base de diamide telle que définie selon l'invention ou obtenue par un procédé de l'invention comme décrits ci-haut, comme additif de rhéologie, dans des compositions réticulables comprenant au moins un composant réactif sensible à une fonction nucléophile, en particulier dans des compositions réticulables dont au moins un des composants réactifs est sensible (c'est-à-dire réactif ou sensible par catalyse) à la présence d'une fonctionnalité nucléophile telle qu'une amine, compositions telles que décrites ci-haut.

Finalement, l'invention couvre un produit fini réticulé qui résulte de l'utilisation telle que définie ci-avant. Plus particulièrement, ledit produit est un film de revêtement, en particulier, un film de peinture, d'encre ou d'adhésif. Selon une autre possibilité, ledit produit peut être un joint d'agent d'étanchéité, de mastic ou de colle. Finalement, selon une autre option, ledit produit peut concerner (ou être) des pièces moulées, en particulier (des pièces moulées) de composite.

Les exemples qui suivent sont donnés à titre d'illustration de l'invention et de ses performances et ne limitent en rien la portée de l'invention.

### Partie Expérimentale

### I - Matières premières utilisées

**Tableau 1 : Matières premières utilisées**

| Produit | Fonction | Référence commerciale | Fournisseur |
|---|---|---|---|
| Acide 12-hydroxystéarique | Réactif | 12-HSA | Jayant Agro |
| Acide hexanoïque | Réactif | Acide Hexanoïque 99% | Aldrich |
| Ethylène diamine | Réactif | Ethylènediamine ≥ 99,5% (GC) | Aldrich |
| Copolymère styrène-anhydride maléique | Réactif | SMA-1000® | Cray Valley HSC |
| Acide Sulfurique | Réactif | Sulfuric acid ACS reagent, 95.0-98.0% | Aldrich |
| diisocyanate de diphénylméthane et 4,4'-diisocyanate de diphénylméthane dans le Mesamoll® | Pré-polymère | Desmoseal® M280 | Bayer |
| Alkylsulfonic phenyl ester | Plastifiant | Mesamoll® | Lanxess |
| Résine homopolymère polyvinylchloride | Charges | Solvin® 373 MC | Solvay |
| Titanium Dioxyde | Pigment | Ti-pure® | Dupont |
| CaCO₃ | Charges | Omya® BLH | Omya |
| MgCO₃ | | | |
| Xylène | Solvant | Xylène | Brabant |
| diisocyanate de diphénylméthane et 4,4'-diisocyanate de diphénylméthane dans le Mesamoll® | Agent Capteur d'eau | Desmodur® VH20 | Bayer |
| Dibutyltin diacetate (DBTA) | catalyseur | TIB KAT® 233 | TIB |
| Tosyl isocyanate (monoisocyanate) tosyl chlorure | Agent Capteur d'eau | Ti Additive® | Bayer |
| Gamma- glycidoxypropyltriméthoxysilane | promoteur d'adhésion | Silquest® A-187 | Momentive |

### II - Méthodes et tests utilisés

### Test d'extrudabilité

Les mastics conditionnés en cartouches sont extrudés à l'aide d'un pistolet pneumatique (type 3M® Air-Operated Flexible Package Applicator) relié à un compresseur à air muni d'un manomètre permettant de contrôler le débit d'air comprimé allant de 250 ± 10 KPa (soit 2,5 bars ± 0,1 bar) lors de l'extrusion. On utilise une buse d'extrusion avec un orifice de diamètre de 5 ± 0,3 mm.

On mesure la masse d'échantillon extrudée pendant un intervalle de temps donné, ce qui permet de retrouver l'extrudabilité de l'échantillon exprimée en g/min.

### Evaluation de la viscosité

Un viscosimètre type Brookfield® DV II + Pro est monté sur un moteur d'entrainement Helipath® et une aiguille en « T » (Mobile : Helipath® spindle set n°595) est fixée au viscosimètre à l'aide d'une connexion prévue à cet effet. Le moteur pilote monte et descend lentement, le viscosimètre permettant ainsi à l'aiguille en « T » de parcourir un trajet hélicoïdal de 30 secondes à travers l'échantillon, évitant ainsi la formation d'un canal. La viscosité de systèmes qui ne coulent pas ou qui ont une structure de gel tel que des mastics, peut ainsi être mesurée.

La viscosité est exprimée en mPa.s et mesurée toutes les 30 secondes (à mi-parcours de l'Helipath®) pendant 1'45 et pour trois vitesses de mobile : 1, 5 et 10 rpm.

### Test de stabilité

Les mesures d'extrudabilité et de viscosité sont réalisées au départ et après un mois de stockage à 23°C. En fonction de ces deux mesures, on établit la stabilité de la rhéologie du mastic.

### Test de résistance à la réticulation prématurée en cartouche

Les cartouches sont contrôlées au départ, après 3 jours de stockage et après un mois. Le test consiste à ouvrir la cartouche et à constater si le produit contenu à l'intérieur est extrudable. Le produit n'est plus extrudable s'il n'est pas fluide après ledit stockage.

### III - Exemples comparatifs et selon l'invention

### EXEMPLE 1 : comparatif

Dans un ballon de 1 litre, équipé d'un thermomètre, d'un Dean Stark, d'un condenseur et d'un agitateur, on introduit sous un courant d'azote, 25,8 grammes d'éthylène diamine (soit 0,43 mole, 0,86 équivalent aminé), 135,52 grammes d'acide hydroxy-12 stéarique (soit 0,43 mole, 0,43 équivalent acide), 49,94 grammes d'acide hexanoïque (soit 0,43 mole, 0,43 équivalent acide). Le mélange est chauffé à 200°C toujours sous courant d'azote. L'eau éliminée s'accumule dans le Dean Stark dès 150°C. La réaction est contrôlée par l'indice d'acide et d'amine. Lorsque les valeurs d'acide et d'amine sont respectivement de 5 et 3,5 mg KOH/g, le mélange réactionnel est refroidi à 150°C, puis déchargé dans un moule siliconé. Une fois refroidi à la température ambiante, le produit est micronisé mécaniquement par broyage dans un broyeur à jet d'air et tamisage pour obtenir une granulométrie fine et contrôlée avec une taille moyenne obtenue de 7 µm.

### EXEMPLE 2 : selon l'invention sans oligomère b)

Dans un ballon de 1 litre équipé d'un thermomètre, d'un Dean Stark, d'un condensateur et d'un agitateur, on introduit sous un courant d'azote, 25,8 grammes d'éthylène diamine (soit 0,43 mole, 0,86 équivalent aminé), 135,52 grammes d'acide hydroxy-12 stéarique (soit 0,43 mole, 0,43 équivalent acide), 49,94 grammes d'acide hexanoïque (soit 0,43 mole, 0,43 équivalent acide). Le mélange est chauffé à 200°C toujours sous courant d'azote. L'eau éliminée s'accumule dans le Dean Stark dès 150°C. La réaction est contrôlée par l'indice d'acide et d'amine. Lorsque les valeurs d'acide et d'amine sont respectivement de 5 et 3,5 mg KOH/g, le mélange réactionnel est refroidi à 150°C et 0,65 g d'acide sulfurique est ajouté. L'indice d'amine contrôlé 30 minutes plus tard est inférieur à 0,01 mg KOH/g. Le mélange réactionnel est alors déchargé dans un moule siliconé. Une fois refroidi à la température ambiante, le produit est micronisé dans un broyeur par jet d'air comme dans l'exemple 1 avec la même taille moyenne.

### EXEMPLE 3 : selon l'invention avec oligomère b)

Dans un ballon de 1 litre équipé d'un thermomètre, d'un Dean Stark, d'un condensateur et d'un agitateur, on introduit sous un courant d'azote, 25,8 grammes d'éthylène diamine (soit 0,43 mole, 0,86 équivalent aminé), 135,52 grammes d'acide hydroxy-12 stéarique (soit 0,43 mole, 0,43 équivalent acide), 49,94 grammes d'acide hexanoïque (soit 0,43 mole, 0,43 équivalent acide). Le mélange est chauffé à 200°C toujours sous courant d'azote. L'eau éliminée s'accumule dans le Dean Stark dès 150°C. La réaction est contrôlée par l'indice d'acide et d'amine. Lorsque les valeurs d'acide et d'amine sont respectivement de 5 et 3,5 mg KOH/g, le mélange réactionnel est refroidi à 150°C et 0,65 g d'acide sulfurique est ajouté. L'indice d'amine contrôlé 30 minutes plus tard est inférieur à 0,01 mg KOH/g. Le mélange réactionnel est alors refroidi à 150°C et 16 grammes de SMA® 1000 est ajouté, ayant une Tg (DSC, 2^{iéme} passage à 10°C/min) de 155°C. 30 minutes plus tard, le mélange du diamide et de l'oligomère SMA® est déchargé dans un moule siliconé. Une fois refroidi à la température ambiante, le produit est micronisé comme dans l'exemple 1 avec la même taille moyenne (7 µl).

### IV - Evaluation des performances rhéologiques dans une formulation de mastic « 1K-PU »

### 1 - Préparation des formulations de mastics 1K-PU

La préparation des formulations se fait à l'aide d'un mélangeur dit planétaire de laboratoire (type Molteni® EMD 1) muni d'un disque de dispersion et d'un racleur permettant de mélanger des produits à très hautes viscosités mais aussi de disperser des poudres dans des systèmes non fluides. Il est équipé d'une pompe à vide permettant d'éviter l'entrée d'humidité lors de la dispersion. La température à l'intérieur du Molteni® EMD 1 est relevée par une sonde fixée au racleur et peut être régulée grâce à un bain.

Ce mélangeur permet de faire des batch de 2 kgs. Une fois le procédé terminé, le mastic est mis en cartouches.

**Tableau 2 : Formulations de mastic « 1K-PU »**

| | | % en poids | | | |
|---|---|---|---|---|---|
| Composants | Fonction | F1 | F2 | F3 | F4 |
| Desmoseal® M 280 | Prépolymère | 31,93 | 31,93 | 31,93 | 31,93 |
| Mesamoll® | Plastifiant | 19,51 | 19,51 | 19,51 | 19,51 |
| Solvin® 373 MC | Charge | 19,51 | 19,51 | 19,51 | 19,51 |
| Exemple 1 | Additif de Rhéologie | 2,60 | 0 | 0 | 0 |
| Exemple 2 | Additif de Rhéologie | 0 | 2,60 | 0 | 2,60 |
| Exemple 3 | Additif de Rhéologie | 0 | 0 | 2,60 | 0 |
| Omya® BLP | Charge | 14,91 | 14,91 | 14,91 | 14,91 |
| TiO₂ | Pigment | 3,9 | 3,9 | 3,9 | 3,9 |
| Desmodur® VH 20 | Agent Capteur d'eau | 0,5 | 0,5 | 0,5 | 0,5 |
| Xylène (A) | Solvant | 3,9 | 3,9 | 3,9 | 3,9 |
| Silquest® A 187 | Promoteur d'adhésion | 0,5792 | 0,5792 | 0,5792 | 0,5792 |
| Additif TI | Agent Capteur d'eau | 0,3968 | 0,3968 | 0,3968 | 0,3968 |
| Xylène (B) | Solvant | 2,224 | 2,224 | 2,224 | 2,224 |
| TIB KAT® 233 | Catalyseur | 0,04 | 0,04 | 0,04 | 0,04 |
| TOTAL | | 100 | 100 | 100 | 100 |

Pour illustrer l'invention et ses performances, 4 formulations : F1, F2, F3 et F4 ont été préparées (voir compositions de ces formulations dans le tableau 2). Dans une première étape et dans les proportions indiquées, le prépolymère et le plastifiant sont ajoutés et homogénéisés. Les charges, le pigment et les produits additifs à comparer micronisés (selon exemples 1, 2 ou 3) sont pesés et ajoutés dans une seconde étape. Le tout est maintenu sous vide pendant les phases de mélange. Pour l'activation des additifs comparés, la température du milieu est portée :
- autour de 50°C (c'est-à-dire 50 ± 2°C) pendant environ 30 minutes pour F1, F2.
- autour de 65°C (c'est-à-dire 65 ± 2°C) pendant environ 30 minutes pour F3, F4.

Lorsque celle-ci est terminée, le promoteur d'adhésion, le xylène (A) et les agents capteurs d'eau sont ajoutés et homogénéisés pendant 5 min. Enfin, on ajoute le catalyseur et le xylène (B) à une température proche de 45°C avant de décharger et mettre en cartouche le mastic.

### 2 - Résultats de l'évaluation de la stabilité, rhéologie et autres propriétés applicatives des formulations (tableaux 3, 4 et 5) :

**Tableau 3 : Résultats d'extrudabilité et de viscosité à 1 jour**

| | à 1 jour | viscosité Brookfield Helipath® (mPa.s à 23°C) | | |
|---|---|---|---|---|
| Formulation | Extrudabilité (g/min) | 1 RPM | 5 RPM | 10 RPM |
| F1 | 900 | 45000 | 40000 | 44000 |
| F2 | 850 | 40000 | 56000 | 44000 |
| F3 | 55 | 2,00 E+06 | 9,70 E+05 | 6,50 E+05 |
| F4 | 80 | 2,50 E+06 | 1,30 E+06 | 9,5 E+05 |

**Tableau 4 : Résultats de résistance à la réticulation prématurée au stockage**

| | résistance à la réticulation en cartouche | |
|---|---|---|
| Formulation | Stabilité à 3 jours | Stabilité à 1 mois |
| F1 | réticulé | réticulé |
| F2 | Fluide - Extrudable | Fluide - Extrudable |
| F3 | Fluide - Extrudable | Fluide - Extrudable |
| F4 | Fluide - Extrudable | Fluide - Extrudable |

**Tableau 5 : Résultats d'extrudabilité et de viscosité à 1 mois**

| | à 1 mois | viscosité Brookfield Helipath® (mPa.s) à 23°C | | |
|---|---|---|---|---|
| Formulation | Extrudabilité (g/min) | 1 RPM | 5 RPM | 10 RPM |
| F1 | non extrudable (réticulé) | (réticulé) | (réticulé) | (réticulé) |
| F2 | 800 | 40000 | 46000 | 42000 |
| F3 | 25 | 2,56 E+06 | 1,50 E+06 | 9,96 E+05 |
| F4 | 40 | 3,00 E+06 | 1,50 E+06 | 1,00 E+06 |

On peut observer, à partir de ces résultats comparatifs, que la formulation F1 à base du produit additif selon l'exemple 1 (comparatif) est instable au bout de 3 jours de stockage et aboutit à un produit réticulé de manière irréversible et non utilisable.

La formulation F2, à base du produit selon l'exemple 2 (invention sans l'oligomère b)), présente une très bonne stabilité au bout d'un mois de stockage avec une activation à basse température (50°C dans la formulation F2) se traduisant par une viscosité à bas gradient (1 rpm) après un mois de stockage, de 40 Pa.s. Par contre, la réalisation de l'activation à plus haute température avec la formulation F4 (65°C dans la formulation F4) permet une activation beaucoup plus performante dans le même milieu (composition) que F2, cette performance se traduisant par une viscosité d'environ 75 fois plus élevée et à 3 E+06 mPa.s (3000 Pa.s).

La formulation F3 à base du produit additif selon l'exemple 3 (selon l'invention avec oligomère b)) permet également une stabilité sans aucun problème au bout de 1 mois de stockage. Sa viscosité à bas gradient (1 rpm) au bout de 1 mois de stockage est assez élevée et de 2500 Pa.s ce qui est plus élevé que celle de la formulation F2 et presque aussi bonne que F4.

Ces résultats démontrent clairement que les formulations comprenant des additifs selon l'invention présentent une excellente stabilité au stockage après 1 mois de stockage, tout en présentant des performances rhéologiques très satisfaisantes conférées par ledit additif après une activation convenable.

## Revendications

1. Composition à base de diamide d'acide gras, **caractérisée en ce qu'**elle comprend et en particulier consiste :
a) de 92 à 100% en poids d'un ou plusieurs diamides d'acide gras, le(s)dit(s) diamide(s) étant traité(s) in situ par un agent neutralisant, de sorte à réduire le taux résiduel d'amine dans lesdits un ou plusieurs diamides d'acide gras, à un indice d'amine résiduelle exprimé en mg KOH/g qui reste inférieur à 0,5, de préférence inférieur à 0,15, plus préférentiellement inférieur à 0,1 et encore plus préférentiellement inférieur à 0,05,
b) en option, 1 à 8% en poids d'au moins un oligomère amorphe ou semi-cristallin de Tg supérieure à 60°C, de préférence supérieure à 70°C,
sous condition que, si ledit oligomère b) est présent, la somme des % en poids a) + b) soit égale à 100% en poids de ladite composition à base de diamide et **en ce que** a) et b) soient miscibles en mélange, en particulier à l'état fondu et que ledit oligomère b) soit exempt de tout groupement ou structure nucléophile.

2. Composition selon la revendication 1, **caractérisée en ce qu'**elle comprend et en particulier consiste :
a) de 92 à 99% en poids d'un ou plusieurs desdits diamides d'acide gras,
b) de 1 à 8% en poids dudit oligomère.

3. Composition selon la revendication 1 ou 2, **caractérisée en ce que** la masse moyenne en nombre Mn dudit oligomère b) est inférieure à 10000 et de préférence inférieure à 5000.

4. Composition selon l'une des revendications 1 à 3, **caractérisée en ce que** ledit diamide a) est symétrique et correspond au produit de réaction d'une mole de diamine linéaire aliphatique en C₂ à C₆ avec deux moles d'acide 12-hydroxy stéarique (12-HSA).

5. Composition selon l'une des revendications 1 à 3, **caractérisée en ce que** ledit diamide a) comprend au moins un diamide dissymétrique qui correspond au produit de réaction d'une mole de diamine linéaire aliphatique en C₂ à C₆ avec une mole d'acide 12-hydroxy stéarique (12-HSA) et une mole d'acide monocarboxylique en C₅ à C₁₂.

6. Composition selon l'une des revendications 1 à 5, **caractérisée en ce que** ledit agent neutralisant comporte au moins une fonction réactive avec ladite amine résiduelle de sorte que le(s) diamide(s) neutralisé(s) a ou ont en final un indice d'amine tel que défini selon la revendication 1 et de préférence ayant un point d'ébullition d'au moins 130°C et plus préférentiellement d'au moins 150°C.

7. Composition selon la revendication 6, **caractérisée en ce que** ledit agent neutralisant est sélectionné parmi :
- les acides forts minéraux ou organiques, en particulier les acides ayant un pka < 2 et de préférence < 1 et/ou
- les halogénures d'acides mono carboxyliques, plus préférentiellement les chlorures d'acides monocarboxyliques
- les halogénures d'acides polycarboxyliques de chaines carbonées ayant un nombre d'atomes de carbone inférieur à 10.

8. Composition selon l'une des revendications 1 à 7, **caractérisée** en ce ledit agent neutralisant est présent en quantité au moins stœchiométrique par rapport à l'indice d'amine résiduel, avec le produit de neutralisation restant in situ dans ledit ou lesdits diamide(s) ainsi traité(s).

9. Composition selon l'une des revendications 1 à 8, **caractérisée en ce que** ledit oligomère b) est fonctionnalisé, de préférence avec une fonction acide carboxy ou qu'il est non fonctionnalisé.

10. Composition selon l'une des revendications 1 à 9, **caractérisée en ce que** si présent, ledit oligomère b) est sélectionné parmi : polyamide, polyester, au moins un copolymère d'anhydride maléique ou d'acide acrylique ou méthacrylique avec au moins un autre comonomère, en particulier copolymère parmi oligoéthylène maléinisé, résine de monomères vinyl aromatiques maleinisée ou copolymère d'anhydride maléique ou d'acide acrylique ou méthacrylique avec au moins un monomère vinyl aromatique, de préférence copolymère styrène-anhydride maléique, copolymère styrène-acide (méth)acrylique, résine à base de monomères cycloaliphatiques maleinisée, cires semi-cristallines maléinisées, résine d'hydrocarbures (de pétrole) maléinisée, résine de colophane maléinisée y compris esters de colophane maléinisés.

11. Composition selon l'une des revendications 1 à 10, **caractérisée en ce que** si présent, ledit oligomère b) est un polyamide présent en mélange avec ledit diamide a) par le fait qu'il a été préparé in situ à l'état fondu après la préparation du diamide a) ou avant la préparation dudit diamide a), dans le même réacteur avec ledit traitement par un agent neutralisant appliqué audit mélange [a) + b)] à l'état fondu.

12. Procédé de préparation d'une composition telle que définie selon l'une des revendications 1 à 11, **caractérisé en ce qu'**il comprend au moins les étapes suivantes et selon option A) :
i) traitement de neutralisation à l'état fondu dudit diamide a) par ledit agent neutralisant, de sorte que l'indice d'amine exprimé en mg KOH/g soit inférieur à 0,5, de préférence inférieur à 0,15, plus préférentiellement inférieur à 0,1 et encore plus préférentiellement inférieur à 0,05 et
ii) en option, si b) est présent, mélange homogène à l'état fondu dudit diamide a) ainsi traité (neutralisé) de l'étape i) avec ledit oligomère b) à l'état fondu
iii) refroidissement du mélange de l'étape i) ou du mélange de l'étape ii) si b) est présent et micronisation par broyage mécanique ou par jet d'air, de préférence pour obtenir une taille moyenne en volume inférieure à 15 µm, plus préférentiellement inférieure à 10 µm.

13. Procédé de préparation d'une composition telle que définie selon l'une des revendications 1 à 11, **caractérisé en ce qu'**il comprend au moins les étapes suivantes selon option B), seulement si ledit oligomère b) est présent :
i) mélange homogène à l'état fondu dudit diamide a) avec ledit oligomère b) à l'état fondu
ii) traitement de neutralisation à l'état fondu dudit mélange de l'étape i), par ledit agent neutralisant, de sorte que l'indice d'amine exprimé en mg KOH/g de diamide a), soit inférieur à 0,5, de préférence inférieur à 0,15, plus préférentiellement inférieur à 0,1 et encore plus préférentiellement inférieur à 0,05
iii) refroidissement du mélange ainsi traité de l'étape ii) et micronisation par broyage mécanique ou par jet d'air, de préférence pour obtenir une taille moyenne en volume inférieure à 15 µm, plus préférentiellement inférieure à 10 µm.

14. Procédé selon la revendication 13, **caractérisé en ce que** ledit oligomère b) est un polyamide et qu'il comprend une étape de préparation dudit polyamide b) à l'état fondu, avant ou après la préparation dudit diamide a), in situ dans le même réacteur et conduisant au mélange homogène de a) et de b) selon ladite étape i), avant ledit traitement de neutralisation à l'état fondu selon l'étape ii).

15. Composition réticulable, **caractérisée en ce qu'**elle comprend au moins une composition à base de diamide telle que définie selon l'une des revendications 1 à 11 ou obtenue par un procédé tel que défini selon la revendication 13 à 14 et **en ce qu'**au moins un des composants réactifs de ladite composition est sensible à la présence d'une fonctionnalité nucléophile telle qu'une amine.

16. Composition selon la revendication 15, **caractérisée en ce qu'**il s'agit d'une composition bicomposante ou monocomposante, laquelle comprend au moins un composant parmi : polyisocyanate, oligomère ou polymère modifié silane, en particulier polyéther modifié silane ou polyuréthane modifié silane, polyépoxyde, silicone, polysulfure, polyanhydride ou acrylate multifonctionnel de fonctionnalité moyenne supérieure à 2, de préférence polyisocyanate, polyépoxyde, polyanhydride, polysulfure ou acrylate multifonctionnel, plus préférentiellement polyisocyanate.

17. Composition selon la revendication 15 ou 16, **caractérisée en ce qu'**il s'agit d'une composition pour revêtements ou une composition de revêtements, en particulier pour ou de peintures, encres, adhésifs ou une composition d'agents d'étanchéité, de mastics, de colles ou une composition de moulage en particulier pour composites.

18. Utilisation d'une composition telle que définie selon l'une des revendications 1 à 10 ou obtenue par un procédé tel que défini selon la revendication 12 à 14, comme additif de rhéologie, dans des compositions réticulables comprenant au moins un composant réactif sensible à une fonction nucléophile, en particulier dans des compositions réticulables telles que définies selon la revendication 15 ou 16.

19. Produit fini réticulé, **caractérisé en ce qu'**il résulte de l'utilisation telle que définie selon la revendication 18.

## Patentansprüche

1. Zusammensetzung auf Basis von Fettsäurediamid, **dadurch gekennzeichnet, dass** sie Folgendes umfasst und insbesondere daraus besteht:
a) 92 bis 100 Gewichts-% an einem oder mehreren Fettsäurediamiden, wobei das/die Fettsäurediamid(e) in situ mit einem neutralisierenden Mittel derart behandelt wird/werden, dass der Restgehalt an Amin in dem einen oder den mehreren Fettsäurediamiden auf einen Restaminindex verringert wird, der in mg KOH/g ausgedrückt wird, wobei er unter 0,5, vorzugsweise unter 0,15, stärker bevorzugt unter 0,1 und noch stärker bevorzugt unter 0,05 bleibt,
b) möglicherweise 1 bis 8 Gewichts-% an mindestens einem amorphen oder halbkristallinen Oligomer mit einer Tg von mehr als 60 °C, vorzugsweise von mehr als 70 °C,
mit der Maßgabe, dass bei Vorliegen des Oligomers b) die Summe der Gewichts-% an a) + b) gleich 100 Gewichts-% der Zusammensetzung auf Basis von Diamid ist, und dadurch, dass a) und b) miteinander mischbar sind, insbesondere im schmelzflüssigen Zustand, und dass das Oligomer b) frei von jedweder nukleophilen Gruppe oder Struktur ist.

2. Zusammensetzung nach Anspruch 1, **dadurch gekennzeichnet, dass** sie Folgendes umfasst und insbesondere daraus besteht:
a) 92 bis 99 Gewichts-% an einem oder mehreren Fettsäurediamiden,
b) 1 bis 8 Gewichts-% en dem Oligomer.

3. Zusammensetzung nach Anspruch 1 oder 2, **dadurch gekennzeichnet, dass** die zahlenmittlere Masse Mn des Oligomers b) weniger als 10.000 und vorzugsweise weniger als 5.000 beträgt.

4. Zusammensetzung nach einem der Ansprüche 1 bis 3, **dadurch gekennzeichnet, dass** das Diamid a) symmetrisch ist und dem Reaktionsprodukt von einem Mol an aliphatischem geradkettigen C₂-C₆-Diamin mit zwei Mol an 12-Hydroxystearinsäure (12-HSA) entspricht.

5. Zusammensetzung nach einem der Ansprüche 1 bis 3, **dadurch gekennzeichnet, dass** das Diamin a) mindestens ein asymmetrisches Diamid umfasst, welches dem Reaktionsprodukt von einem Mol an aliphatischem geradkettigen C₂-C₆-Diamin mit einem Mol an 12-Hydroxystearinsäure (12-HSA) und mit einem Mol an C₅-C₁₂-Monocarbonsäure entspricht.

6. Zusammensetzung nach einem der Ansprüche 1 bis 5, **dadurch gekennzeichnet, dass** das neutralisierende Mittel mindestens eine funktionelle Gruppe umfasst, die mit dem Restamin derart reagieren kann, dass das/die neutralisierte(n) Diamid(e) einen Endwert des Aminindex, wie er in Anspruch 1 festgelegt ist, sowie vorzugsweise einen Siedepunkt von mindestens 130 °C und stärker bevorzugt von mindestens 150 °C hat/haben.

7. Zusammensetzung nach Anspruch 6, **dadurch gekennzeichnet, dass** das neutralisierende Mittel aus den folgenden ausgewählt ist:
- den mineralischen oder organischen starken Säuren, insbesondere den Säuren mit einem pKa < 2 und vorzugsweise < 1 und/oder
- den Monocarbonsäurehalogeniden, stärker bevorzugt den Monocarbonsäurechloriden
- den Polycarbonsäurehalogeniden mit Kohlenstoffketten, deren Anzahl an Kohlenstoffatomen geringer als 10 ist.

8. Zusammensetzung nach einem der Ansprüche 1 bis 7, **dadurch gekennzeichnet, dass** das neutralisierende Mittel in einer zumindest stöchiometrischen Menge unter Bezugnahme auf den Restaminindex vorliegt, wobei das Neutralisationsprodukt in situ in dem oder den Diamid(en) verbleibt, welche(s) auf diese Weise behandelt wurde(n).

9. Zusammensetzung nach einem der Ansprüche 1 bis 8, **dadurch gekennzeichnet, dass** das Oligomer b) mit einer funktionellen Gruppe versehen ist, vorzugsweise mit einer funktionellen Carbonsäuregruppe, oder dass es frei von funktionellen Gruppen ist.

10. Zusammensetzung nach einem der Ansprüche 1 bis 9, **dadurch gekennzeichnet, dass** das Oligomer b), sofern es vorliegt, aus Folgendem ausgewählt ist: den Polyamiden, den Polyestern, mindestens einem Copolymer von Maleinsäureanhydrid oder von Acryl- oder Methacrylsäure mit mindestens einem weiteren Comonomer, wobei zu diesen Copolymeren insbesondere maleinsäureversetztes Oligoethylen, maleinsäureversetzte Harze aromatischer Vinylmonomere oder Copolymere von Maleinsäureanhydrid oder von Acryl- oder Methacrylsäure mit mindestens einem aromatischen Vinylmonomer, vorzugsweise Styrol-Maleinsäureanhydrid-Copolymere, Styrol-(Meth)acrylsäure-Copolymere zählen, den maleinsäureversetzten Harzen auf Basis cycloaliphatischer Monomere, den maleinsäureversetzten halbkristallinen Wachsen, den maleinsäureversetzten Harzen (erdölbasierter) Kohlenwasserstoffe, den maleinsäureversetzten Kolophoniumharzen einschließlich maleinsäureversetzter Kolophoniumester.

11. Zusammensetzung nach einem der Ansprüche 1 bis 10, **dadurch gekennzeichnet, dass** es sich bei dem Oligomer b), sofern es vorliegt, um ein Polyamid handelt, welches dadurch in Mischung mit dem Diamid a) vorliegt, dass es nach der Bereitstellung des Diamids a) oder vor der Bereitstellung des Diamids a) in situ, im selben Reaktor, im schmelzflüssigen Zustand bereitgestellt wird, wobei die Behandlung erfolgt, indem ein neutralisierendes Mittel auf die Mischung [a) + b)] im schmelzflüssigen Zustand einwirkt.

12. Verfahren zur Herstellung einer Zusammensetzung gemäß der Begriffsbestimmung in einem der Ansprüche 1 bis 11, **dadurch gekennzeichnet, dass** es gemäß Option A) die folgenden Schritte umfasst:
i) Neutralisationsbehandlung des Diamids a) im schmelzflüssigen Zustand durch das neutralisierende Mittel, derart, dass der Restaminindex, welcher in mg KOH/g ausgedrückt wird, weniger als 0,5, vorzugsweise weniger als 0,15, stärker bevorzugt weniger als 0,1 und noch stärker bevorzugt weniger als 0,05 beträgt, und
ii) möglicherweise, sofern b) vorliegt, gleichförmiges Vermischen im schmelzflüssigen Zustand des auf diese Weise behandelten (neutralisierten) Diamids a) aus dem Schritt i) mit dem Oligomer b) im schmelzflüssigen Zustand
iii) Abkühlen der Mischung des Schrittes i) oder, sofern b) vorliegt, der Mischung des Schrittes ii) und Mikronisieren durch mechanische Zerkleinerung oder mittels eines Luftstrahls, um vorzugsweise eine volumenbezogene mittlere Größe von weniger als 15 µm, stärker bevorzugt von weniger als 10 µm, zu erzielen.

13. Verfahren zur Herstellung einer Zusammensetzung gemäß der Begriffsbestimmung in einem der Ansprüche 1 bis 11, **dadurch gekennzeichnet, dass** es gemäß Option B) zumindest die folgenden Schritte umfasst, jedoch nur bei Vorliegen des Oligomers b):
i) gleichförmiges Vermischen im schmelzflüssigen Zustand des Diamids a) mit dem Oligomer b), welche sich im schmelzflüssigen Zustand befinden,
ii) Neutralisationsbehandlung im schmelzflüssigen Zustand der Mischung des Schrittes i) durch das neutralisierende Mittel, derart, dass der Restaminindex, welcher in mg KOH/g des Diamids a) ausgedrückt wird, weniger als 0,5, vorzugsweise weniger als 0,15, stärker bevorzugt weniger als 0,1 und noch stärker bevorzugt weniger als 0,05 beträgt,
iii) Abkühlen der auf diese Weise behandelten Mischung des Schrittes ii) und Mikronisieren durch mechanische Zerkleinerung oder mittels eines Luftstrahls, um vorzugsweise eine volumenbezogene mittlere Größe von weniger als 15 µm, stärker bevorzugt von weniger als 10 µm zu erzielen.

14. Verfahren nach Anspruch 13, **dadurch gekennzeichnet, dass** das Oligomer b) ein Polyamid ist und dass es, vor oder nach der Bereitstellung des Diamids a), einen Schritt des Bereitstellens des Polyamids b) im schmelzflüssigen Zustand umfasst, in situ im selben Reaktor, wobei dies zu einer gleichförmigen Mischung aus a) und b) gemäß dem Schritt i) führt, im Vorfeld der Neutralisationsbehandlung im geschmolzenen Zustand gemäß dem Schritt ii).

15. Vernetzbare Zusammensetzung, **dadurch gekennzeichnet, dass** sie mindestens eine Zusammensetzung auf Basis von Diamid umfasst, die der Begriffsbestimmung in einem der Ansprüche 1 bis 11 entspricht oder die mittels eines Verfahrens gemäß der Begriffsbestimmung in Anspruch 13 bis 14 hergestellt wurde, und dadurch, dass mindestens einer der reaktionsfähigen Bestandteile der Zusammensetzung auf das Vorliegen einer nukleophilen funktionellen Gruppe, wie etwa auf ein Amin, anspricht.

16. Zusammensetzung nach Anspruch 15, **dadurch gekennzeichnet, dass** es sich um eine Zusammensetzung mit zwei Bestandteilen oder mit einem Bestandteil handelt, die mindestens einen der folgenden Bestandteile umfasst: Polyisocyanat, silanmodifiziertes Oligomer oder Polymer, insbesondere silanmodifizierter Polyether oder silanmodifiziertes Polyurethan, Polyepoxid, Silikon, Polysulfid, multifunktionelles Polyanhydrid oder Acrylat mit einer mittleren Anzahl funktioneller Gruppe von mehr als 2, wobei es sich vorzugsweise um ein multifunktionelles Polyisocyanat, Polyepoxid, Polyanhydrid, Polysulfid oder Acrylat, stärker bevorzugt Polyisocyanat, handelt.

17. Zusammensetzung nach Anspruch 15 oder 16, **dadurch gekennzeichnet, dass** es sich um eine Zusammensetzung für Beschichtungen oder eine Zusammensetzung aus Beschichtungen, insbesondere für oder aus Anstrichmitteln, Druckfarben, Klebstoffen, oder um eine Zusammensetzung aus Dichtungsmitteln, aus Dichtungsmassen, aus Leimen, oder um eine formbare Zusammensetzung handelt, welche insbesondere für Verbundstoffe bestimmt ist.

18. Verwendung einer Zusammensetzung, die der Begriffsbestimmung in einem der Ansprüche 1 bis 10 entspricht oder die mittels eines Verfahrens gemäß der Begriffsbestimmung in Anspruch 12 bis 14 hergestellt wurde, als Rheologiezusatzstoff, in vernetzbaren Zusammensetzungen, die mindestens einen reaktionsfähigen Bestandteil umfassen, welcher auf eine nukleophile funktionelle Gruppe anspricht, insbesondere in vernetzbaren Zusammensetzungen gemäß der Begriffsbestimmung in Anspruch 15 oder 16.

19. Vernetztes Endprodukt, **dadurch gekennzeichnet, dass** es aus der Verwendung gemäß der Begriffsbestimmung in Anspruch 18 hervorgeht.

## Claims

1. Composition based on fatty acid diamide, **characterized in that** it comprises and in particular consists of:
a) from 92% to 100% by weight of one or more fatty acid diamides, the said diamide(s) being treated in situ by a neutralizing agent, so as to reduce the residual amine content in the said one or more fatty acid diamides to a residual amine number, expressed in mg KOH/g, which remains less than 0.5, preferably less than 0.15, more preferably less than 0.1 and more preferably still less than 0.05,
b) optionally, from 1% to 8% by weight of at least one amorphous or semicrystalline oligomer with a Tg of greater than 60°C, preferably of greater than 70°C,
provided that, if the said oligomer b) is present, the sum of the % by weight a) + b) is equal to 100% by weight of the said diamide-based composition, and that a) and b) are miscible as a blend, in particular in the molten state, and that the said oligomer b) is devoid of any nucleophilic group or structure.

2. Composition according to Claim 1, **characterized in that** it comprises and in particular consists of:
a) from 92% to 99% by weight of one or more of the said fatty acid diamides,
b) from 1% to 8% by weight of the said oligomer.

3. Composition according to Claim 1 or 2, **characterized in that** the number-average weight Mn of the said oligomer b) is less than 10 000 and preferably less than 5000.

4. Composition according to one of Claims 1 to 3, **characterized in that** the said diamide a) is symmetrical and corresponds to the reaction product of one mole of linear aliphatic C₂ to C₆ diamine with two moles of 12-hydroxystearic acid (12-HSA).

5. Composition according to one of Claims 1 to 3, **characterized in that** the said diamide a) comprises at least one asymmetric diamide which corresponds to the reaction product of one mole of linear aliphatic C₂ to C₆ diamine with one mole of 12-hydroxystearic acid (12-HSA) and one mole of C₅ to C₁₂ monocarboxylic acid.

6. Composition according to one of Claims 1 to 5, **characterized in that** the said neutralizing agent comprises at least one functional group which reacts with the said residual amine so that the neutralized diamide(s) has or have in the end an amine number as defined according to Claim 1 and preferably having a boiling point of at least 130°C and more preferably at least 150°C.

7. Composition according to Claim 6, **characterized in that** the said neutralizing agent is selected from:
- strong inorganic or organic acids, in particular acids having a pKa < 2 and preferably < 1, and/or
- monocarboxylic acid halides, more preferably monocarboxylic acid chlorides,
- polycarboxylic acid halides with carbon chains having a number of carbon atoms of less than 10.

8. Composition according to one of Claims 1 to 7, **characterized in that** the said neutralizing agent is present in an at least stoichiometric amount with respect to the residual amine number, with the neutralization product remaining in situ in the said diamide(s) thus treated.

9. Composition according to one of Claims 1 to 8, **characterized in that** the said oligomer b) is functionalized, preferably with a carboxylic acid functional group, or **in that** it is nonfunctionalized.

10. Composition according to one of Claims 1 to 9, **characterized in that**, if present, the said oligomer b) is selected from: polyamide, polyester, at least one copolymer of maleic anhydride or of acrylic or methacrylic acid with at least one other comonomer, in particular copolymer from maleinized oligoethylene, maleinized resin of vinylaromatic monomers or copolymer of maleic anhydride or of acrylic or methacrylic acid with at least one vinylaromatic monomer, preferably styrene/maleic anhydride copolymer, styrene/(meth)acrylic acid copolymer, maleinized resin based on cycloaliphatic monomers, maleinized semicrystalline waxes, maleinized resin of (petroleum) hydrocarbons, maleinized resin of rosin, including maleinized esters of rosin.

11. Composition according to one of Claims 1 to 10, **characterized in that**, if present, the said oligomer b) is a polyamide present as a blend with the said diamide a) **in that** it has been prepared in situ in the molten state, after the preparation of the diamide a) or before the preparation of the said diamide a), in the same reactor with the said treatment by a neutralizing agent applied to the said blend [a)+b)] in the molten state.

12. Process for the preparation of a composition as defined according to one of Claims 1 to 11, **characterized in that** it comprises at least the following stages and according to option A):
i) treatment for the neutralization in the molten state of the said diamide a) by the said neutralizing agent, so that the amine number, expressed in mg KOH/g, is less than 0.5, preferably less than 0.15, more preferably less than 0.1 and more preferably still less than 0.05, and
ii) optionally, if b) is present, homogeneous blending in the molten state of the said diamide a), thus treated (neutralized), of stage i) with the said oligomer b) in the molten state,
iii) cooling the blend of stage i) or the blend of stage ii), if b) is present, and micronizing by mechanical grinding or by an air jet, preferably in order to obtain a volume-average size of less than 15 µm, more preferably of less than 10 µm.

13. Process for the preparation of a composition as defined according to one of Claims 1 to 11, **characterized in that** it comprises at least the following stages according to option B), only if the said oligomer b) is present:
i) homogeneous blending in the molten state of the said diamide a) with the said oligomer b) in the molten state,
ii) treatment for the neutralization in the molten state of the said blend of stage i) by the said neutralizing agent, so that the amine number, expressed in mg KOH/g of diamide a), is less than 0.5, preferably less than 0.15, more preferably less than 0.1 and more preferably still less than 0.05,
iii) cooling the blend thus treated of stage ii) and micronizing by mechanical grinding or by an air jet, preferably in order to obtain a volume-average size of less than 15 µm, more preferably of less than 10 µm.

14. Process according to Claim 13, **characterized in that** the said oligomer b) is a polyamide and **in that** it comprises a stage of preparation of the said polyamide b) in the molten state, before or after the preparation of the said diamide a) in situ in the same reactor and resulting in the homogeneous blend of a) and of b) according to the said stage i), before the said neutralization treatment in the molten state according to stage ii).

15. Crosslinkable composition, **characterized in that** it comprises at least one diamide-based composition as defined according to one of Claims 1 to 11 or obtained by a process as defined according to Claim 13 or Claim 14 and **in that** at least one of the reactive components of the said composition is sensitive to the presence of a nucleophilic functionality, such as an amine.

16. Composition according to Claim 15, **characterized in that** it is a two-component or one-component composition, which comprises at least one component from: polyisocyanate, silane-modified oligomer or polymer, in particular silane-modified polyether or silane-modified polyurethane, polyepoxide, silicone, polysulphide, polyanhydride or multifunctional acrylate having a mean functionality of greater than 2, preferably polyisocyanate, polyepoxide, polyanhydride, polysulphide or multifunctional acrylate, more preferably polyisocyanate.

17. Composition according to Claim 15 or 16, **characterized in that** it is a composition for coatings or a composition of coatings, in particular for or of paints, inks or adhesives, or a composition of leaktightness agents, of mastics or of adhesives, or a moulding composition, in particular a composition for composites.

18. Use of a composition as defined according to one of Claims 1 to 10 or obtained by a process as defined according to Claim 12 to Claim 14 as rheology additive in crosslinkable compositions comprising at least one reactive component which is sensitive to a nucleophilic functional group, in particular in crosslinkable compositions as defined according to Claim 15 or 16.

19. Crosslinked finished product, **characterized in that** it results from the use as defined according to Claim 18.
